# EUROPÄISCHE PATENTANMELDUNG

(11) **EP 4 492 706 A1**
(43) Veröffentlichungstag der Anmeldung: **15.01.2025**
(21) Anmeldenummer: 23184482.0
(22) Anmeldetag: 10.07.2023
(51) Int. Cl.: H04B 10/50, H04B 10/80

(54) **SCHNELLE DATENÜBERTRAGUNG MIT ARRAY LICHTEMITTIERENDER DIODEN**

(71) Anmelder: Siemens Aktiengesellschaft, 80333 München (DE)
(72) Erfinder: Wetzel, Ulrich, 91325 Adelsdorf (DE)
(74) Vertreter: Siemens Patent Attorneys

(57) **Zusammenfassung**

Eine optische Sendeanordnung weist einen optischen Chip (1), einen Lichtwellenleiter (5) und eine Steuerschaltung (11) auf. Auf dem optischen Chip (1) ist ein zweidimensionales Array (2) von lichtemittierenden Dioden (3) angeordnet, die eine einheitliche Hauptabstrahlrichtung (4) aufweisen, in der sie das von ihnen emittierte Licht abstrahlen. Der Lichtwellenleiter (5) ist in der Hauptabstrahlrichtung (4) gesehen vor dem zweidimensionalen Array (2) von lichtemittierenden Dioden (3) angeordnet. Aufgrund der Anordnung des Lichtwellenleiters (5) weist das zweidimensionale Array (2) erste und zweite lichtemittierende Dioden (3b) auf. Das von den ersten lichtemittierenden Dioden (3a) abgestrahlte Licht koppelt in den Lichtwellenleiter (5) ein, das von den zweiten lichtemittierenden Dioden (3b) abgestrahlte Licht nicht. Die Steuerschaltung (11) ist derart ausgebildet, dass sie im Betrieb zumindest einen Teil der ersten lichtemittierenden Dioden (3a) ansteuert, so dass von diesen lichtemittierenden Dioden (3a) abgestrahltes und in den Lichtwellenleiter (5) eingekoppeltes Licht entsprechend einem der Steuerschaltung (11) zugeführten zu übertragenden Datenstrom (D) moduliert ist. Zumindest die zweiten lichtemittierenden Dioden (3b) steuert die Steuerschaltung (11) im Betrieb nicht an, so dass von den zweiten lichtemittierenden Dioden (3b) kein Licht abgestrahlt wird.

## Beschreibung

Die vorliegende Erfindung geht aus von einer optischen Sendeanordnung, die einen optischen Chip, einen Lichtwellenleiter und eine Steuerschaltung aufweist.

Derartige optische Sendeanordnungen sind allgemein bekannt.

In der industriellen Kommunikation werden bei Übertragungsraten bis 100 Mbit/s (Fast Ethernet) meist Kupferleitungen verwendet. Diese Leitungen müssen aufwendig geschirmt sein, damit die Daten in den anspruchsvollen EMV-Umgebungen störungsfrei Signale übertragen werden können. Die Verbindungen bestehen meist aus komplexen Stecksystemen. Die Signalübertragung ist oftmals differenziell und potenzialentkoppelt.

Bei höheren Datenraten oberhalb von 100 Mbit/s sind Kupferleitungen sehr aufwendig und teuer und darüber hinaus bei größeren Entfernungen von 100 m und mehr nicht geeignet. In diesem Fall werden meist optische Datenleitungen in Form von Glas oder Kunststoff verwendet. Mit derartigen Datenleitungen können weit höhere Signalbandbreiten realisiert werden. Darüber hinaus arbeiten sie auch bei anspruchsvollen EMV-Umgebungen störungsfrei. Insbesondere ergibt sich ganz von selbst die galvanische Trennung zwischen den Endstationen (Sender und Empfänger). Zusätzliche Trennungs- bzw. Koppelkomponenten wie beispielsweise Transformatoren, kapazitive Koppler oder optische Koppler sind nicht erforderlich.

Im Stand der Technik werden bei optischen Übertragungssystemen für hohe Datenraten und lange Distanzen meist Halbleiterlaserdioden verwendet, beispielsweise auf Basis von VCSEL (vertical cavity surface emitting laser) oder EEL (edge emitting laser). Derartige Laserdioden lassen eine hohe Ansteuerfrequenz zu. Nachteilig ist jedoch, dass die Kosten einer derartigen optischen Sendeanordnung in der Regel relativ hoch sind, insbesondere höher als bei entsprechenden Leuchtdioden. Auch ist die Lebensdauer von Laserdioden geringer als die von Leuchtdioden. Weiterhin fallen Laserdioden im Falle eines Defekts meistens abrupt aus. Auch dies steht im Gegensatz zu Leuchtdioden, bei denen die Degradation eher über einen längeren Zeitraum erfolgt. Leuchtdioden können im Stand der Technik jedoch in High-Speed-Datenübertragungssystemen nicht genutzt werden, da die Grenzfrequenz von Leuchtdioden zu niedrig ist. Seine Ursache hat dies in der relativ großen Fläche der Leuchtdioden. Dadurch weisen Leuchtdioden eine große Kapazität auf, welche mit der zu übertragenden Datenrate immer wieder umgeladen werden muss. Erschwerend kommt hinzu, dass der verwendete Wellenleiter für lange Distanzen einen kleinen Durchmesser aufweisen muss, um Dämpfungsverluste (Dispersions-Effekte) gering zu halten. Bei großen Emittierungsflächen von LEDs wären die Einkopplungs-Verluste sehr hoch gegenüber den kleinen Flächen der Laserdioden.

Die Aufgabe der vorliegenden Erfindung besteht darin, eine optische Sendeanordnung zu schaffen, die einfach und kostengünstig realisierbar ist und auch im Dauerbetrieb zuverlässig arbeitet.

Die Aufgabe wird durch eine optische Sendeanordnung mit den Merkmalen des Anspruchs 1 gelöst. Vorteilhafte Ausgestaltungen der optischen Sendeanordnung sind Gegenstand der abhängigen Ansprüche 2 bis 11.

Erfindungsgemäß wird eine optische Sendeanordnung der eingangs genannten Art dadurch ausgestaltet,
- dass auf dem optischen Chip ein zweidimensionales Array von lichtemittierenden Dioden angeordnet ist,
- dass die lichtemittierenden Dioden eine einheitliche Hauptabstrahlrichtung aufweisen, in der sie das von ihnen emittierte Licht abstrahlen,
- dass der Lichtwellenleiter in der Hauptabstrahlrichtung gesehen vor dem zweidimensionalen Array von lichtemittierenden Dioden angeordnet ist,
- dass das zweidimensionale Array aufgrund der Anordnung des Lichtwellenleiters erste lichtemittierende Dioden aufweist, deren abgestrahltes Licht in den Lichtwellenleiter einkoppelt, und zweite lichtemittierende Dioden aufweist, deren abgestrahltes Licht nicht in den Lichtwellenleiter einkoppelt, und
- dass die Steuerschaltung derart ausgebildet ist, dass sie im Betrieb
   -- zumindest einen Teil der ersten lichtemittierenden Dioden ansteuert, so dass von den angesteuerten ersten lichtemittierenden Dioden abgestrahltes und in den Lichtwellenleiter eingekoppeltes Licht entsprechend einem der Steuerschaltung zugeführten zu übertragenden Datenstrom moduliert ist, und
   -- zumindest die zweiten lichtemittierenden Dioden nicht ansteuert, so dass von den zweiten lichtemittierenden Dioden kein Licht abgestrahlt wird.

Mit dem Begriff "Chip" ist dasjenige Bauteil gemeint, das im englischen als "die" bezeichnet wird, nicht dasjenige Bauteil, das im englischen als "package" bezeichnet wird.

Die Größe des zweidimensionalen Arrays (gemessen in der Einheit "Anzahl von lichtemittierenden Dioden") kann nach Bedarf sein. In der Regel liegt die Größe bei mindestens 10 x 10 lichtemittierenden Dioden.

Die Hauptabstrahlrichtung ist diejenige Richtung, in welcher die Abstrahlungsintensität am größten ist. Die Abstrahlungsintensität nimmt bei Abweichungen von der Hauptabstrahlrichtung in der Regel allmählich ab. Das von einer einzelnen lichtemittierenden Diode abgestrahlte Licht bildet daher eine sogenannte Strahlungskeule. Der Öffnungswinkel einer derartigen Strahlungskeule liegt meist im mittleren zweistelligen Gradbereich, beispielsweise zwischen 20° und 60°.

In ähnlicher Weise ist auch das Einkoppeln von Licht in den Lichtwellenleiter ein gradueller Prozess. In der Praxis wird
- bezogen auf eine einzelne lichtemittierende Diode - ein Schwellenwert für die in den Lichtwellenleiter eingekoppelte Lichtintensität festgelegt, die bei einem bestimmten, für die lichtemittierenden Dioden einheitlichen Strom oder bei einer bestimmten, von der entsprechenden lichtemittierenden Diode abgestrahlten und für die lichtemittierenden Dioden einheitlichen Lichtmenge in den Lichtwellenleiter eingekoppelt wird. Liegt die eingekoppelte Lichtintensität oberhalb des Schwellenwertes, wird auf Einkopplung erkannt, liegt sie unterhalb, wird auf Nicht-Einkopplung erkannt. Unabhängig von der genauen Art und Weise der Einstufung als erste oder zweite lichtemittierende Diode ist die Einstufung aber komplementär. Eine bestimmte lichtemittierende Diode des zweidimensionalen Arrays ist also entweder eine erste oder eine zweite lichtemittierende Diode.

Die zweiten lichtemittierenden Dioden werden von der Steuerschaltung im Betrieb stets nicht angesteuert. Sie sind also inaktiv. Bezüglich der ersten lichtemittierenden Dioden ist es möglich, dass die Steuerschaltung im Betrieb alle ersten lichtemittierenden Dioden ansteuert. Alternativ ist es aber ebenso möglich, dass die Steuerschaltung im Betrieb nur einen "echten" Teil der ersten lichtemittierenden Dioden ansteuert, dass also mindestens eine erste lichtemittierende Diode vorhanden ist, die von der Steuerschaltung nicht angesteuert wird.

Vorzugsweise weist die Steuerschaltung für die angesteuerten ersten lichtemittierenden Dioden jeweils eine eigene Treiberschaltung auf. Dadurch ergibt sich insbesondere eine individuelle Ansteuerung der ersten lichtemittierenden Dioden.

Vorzugsweise ist die Anzahl an Treiberschaltungen der Steuerschaltung kleiner als die Anzahl an lichtemittierenden Dioden des zweidimensionalen Arrays. Dadurch kann der Gesamtaufwand, der für die Realisierung der optischen Sendeanordnung erforderlich ist, gering gehalten werden.

Vorzugsweise ist die Steuerschaltung derart ausgebildet, dass sie Steuersignale, mit denen sie die den angesteuerten ersten lichtemittierenden Dioden zugeordnete Treiberschaltungen ansteuert, überwacht, und auf Ausfall einer jeweiligen angesteuerten ersten lichtemittierenden Diode erkennt, wenn das Steuersignal, mit dem sie die entsprechende Treiberschaltung ansteuert, einen Maximalwert erreicht, ohne dass ein der jeweiligen angesteuerten ersten lichtemittierenden Diode von der zugeordneten Treiberschaltung zugeführtes Ausgangssignal einen Sollwert erreicht. Dadurch kann in aller Regel ein drohender Ausfall der optischen Sendeanordnung rechtzeitig vor einem tatsächlichen Ausfall erkannt werden. Insbesondere ist bei Ausfall einer einzelnen angesteuerten lichtemittierenden Diode ein Weiterbetrieb der optischen Sendeanordnung noch möglich. Ein Weiterbetrieb ist erst dann nicht mehr möglich, wenn zu viele der (eigentlich) angesteuerten lichtemittierenden Dioden ausfallen.

Bei Erkennen eines Ausfalls einer lichtemittierenden Diode kann die Steuerschaltung - alternativ oder kumulativ - verschiedene Maßnahmen ergreifen. Beispielsweise kann die Steuerschaltung eine Warnmeldung an eine übergeordnete Steuereinrichtung ausgeben. Auch kann sie eine Warnmeldung an eine Bedienperson ausgeben, die von der Bedienperson mit ihren Sinnesorganen unmittelbar wahrnehmbar ist, insbesondere eine optische oder akustische Warnmeldung. Wenn die Steuerschaltung in die Steuereinrichtung und die integrierte Schaltung mit programmierbarer Verdrahtung aufgeteilt ist, kann es sogar möglich sein, dass die Steuereinrichtung eine Reprogrammierung der integrierten Schaltung mit programmierbarer Verdrahtung vornimmt. Dadurch kann der Weiterbetrieb der optischen Sendeanordnung länger aufrechterhalten werden.

Es ist sogar möglich, diesen Sachverhalt gezielt einzusetzen. Beispielsweise ist es möglich, nur einen Teil der ersten lichtemittierenden Dioden zu betreiben und bei Ausfall einer der betriebenen Dioden eine andere der ersten lichtemittierenden Dioden zu aktivieren, so dass der Gesamt-Signalpegel aufrechterhalten bleibt. Dadurch kann die effektive Lebensdauer der Sendeanordnung als Ganzes verlängert werden.

Vorzugsweise ist vorgesehen,
- dass die Steuerschaltung eine Steuereinrichtung und eine integrierte Schaltung mit programmierbarer Verdrahtung aufweist,
- dass der zu übertragende Datenstrom der Steuereinrichtung der Steuerschaltung zugeführt wird,
- dass die Steuereinrichtung Steuersignale an die Treiberschaltungen ausgibt, die entsprechend dem zu übertragenden Datenstrom moduliert sind, so dass die Treiberschaltungen Ausgangssignale ausgeben, die entsprechend dem zu übertragenden Datenstrom moduliert sind,
- dass die Ausgangssignale der integrierten Schaltung mit programmierbarer Verdrahtung zugeführt werden und
- dass die integrierte Schaltung mit programmierbarer Verdrahtung die ihr zugeführten Ausgangssignale an die angesteuerten ersten lichtemittierenden Dioden weiterleitet.

Die Festlegung, welches der Steuersignale an welche der lichtemittierenden Dioden ausgegeben wird, erfolgt somit durch die Programmierung der integrierten Schaltung mit programmierbarer Verdrahtung. Entsprechende integrierte Schaltungen mit programmierbarer Verdrahtung sind allgemein bekannt. Beispielsweise können übliche PGAs (programmable gate array) oder FPGAs (field programmable gate array) verwendet werden.

Durch die Verwendung der integrierten Schaltung mit programmierbarer Verdrahtung kann erreicht werden, dass die erforderliche Zuordnung der einzelnen Treiberschaltungen zu den entsprechenden ersten lichtemittierenden Dioden bei der Finalisierung der optischen Sendeanordnung auf einfache Weise realisiert werden kann.

Vorzugsweise sind die Steuereinrichtung und die integrierte Schaltung mit programmierbarer Verdrahtung derart ausgebildet und miteinander verbunden, dass die integrierte Schaltung mit programmierbarer Verdrahtung von der Steuereinrichtung programmierbar ist. Dadurch kann die Programmierung der integrierten Schaltung mit programmierbarer Verdrahtung durch die Steuereinrichtung erfolgen. Dies kann insbesondere von Vorteil sein, wenn diese Programmierung beim späteren Betrieb der optischen Sendeanordnung automatisiert geändert werden soll oder muss.

In aller Regel weist die optische Sendeanordnung eine Leiterplatte auf. In vielen Fällen ist hierbei von Vorteil, wenn der Lichtwellenleiter Bestandteil der Leiterplatte ist. Insbesondere bei der Anwendung im Leistungsbereich kann dadurch auf einfache Art und Weise innerhalb der Leiterplatte eine datentechnische Verbindung zwischen auf der Leiterplatte angeordneten Signalkomponenten und Leistungskomponenten erfolgen.

Vorzugsweise ist der optische Chip auf einem Chipträger angeordnet und ist der Chipträger derart auf der Leiterplatte angeordnet, dass das zweidimensionale Array von lichtemittierenden Dioden in einer Ausnehmung der Leiterplatte angeordnet ist. Dadurch ist die Anordnung des Chipträgers und die Einkopplung von Licht in den Lichtwellenleiter besonders einfach realisierbar.

Vorzugsweise weisen die lichtemittierenden Dioden als Bestandteil des optischen Chips jeweils eine Sammellinse auf. Dadurch kann die Einkopplung von Licht in den Lichtwellenleiter maximiert werden. Die Gesamtheit an Sammellinsen wird üblicherweise als Lenslet-Array bezeichnet.

Vorzugsweise weisen die lichtemittierenden Dioden nur relativ geringe Abmessungen auf. Insbesondere überdecken die lichtemittierenden Dioden orthogonal zur Hauptabstrahlrichtung gesehen vorzugsweise jeweils eine Fläche von maximal 0,005 Quadratmillimeter, vorzugsweise eine Fläche von maximal 0,003 Quadratmillimeter. Eine Fläche von 0,005 Quadratmillimeter entspricht in etwa einem Quadrat von 70 µm Seitenlänge, eine Fläche von 0,003 Quadratmillimeter in etwa einem Quadrat von 55 µm Seitenlänge.

Vorzugsweise sind die lichtemittierenden Dioden Leuchtdioden, also LEDs (im Gegensatz zu Laserdioden). Leuchtdioden unterscheiden sich von Laserdioden insbesondere dadurch, dass Leuchtdioden inkohärentes Licht abstrahlen, während Laserdioden kohärentes Licht abstrahlen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: wesentliche Bestandteile einer optischen Sendeanordnung,
- FIG 2: eine perspektivische Darstellung eines zweidimensionalen Arrays von lichtemittierenden Dioden,
- FIG 3: eine Draufsicht auf ein zweidimensionales Array von lichtemittierenden Dioden aus einer Hauptabstrahlrichtung,
- FIG 4: ein Blockschaltbild,
- FIG 5: eine Seitenansicht eines optischen Chips und eines Lichtwellenleiters,
- FIG 6: ein Ablaufdiagramm und
- FIG 7: ein weiteres Ablaufdiagramm.

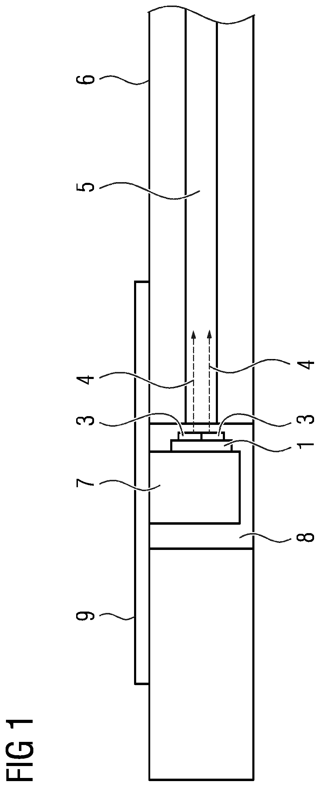

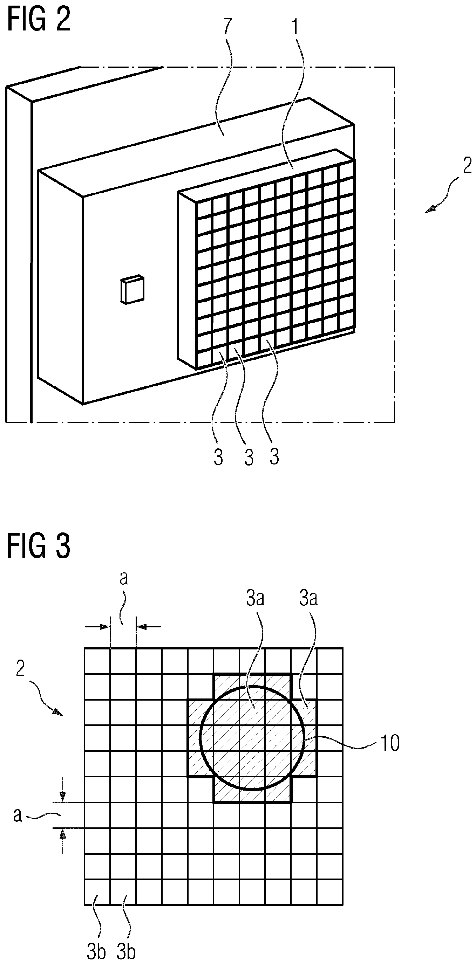

Gemäß FIG 1 weist eine optische Sendeanordnung einen optischen Chip 1 auf. Auf dem optischen Chip 1 ist gemäß den FIG 2 und 3 ein zweidimensionales Array 2 von lichtemittierenden Dioden 3 angeordnet. Von den Dioden 3 sind in den FIG 2 und 3 nur einige mit ihrem Bezugszeichen versehen. Die lichtemittierenden Dioden 3 können im Einzelfall Laserdioden sein. In der Regel handelt es sich jedoch um Leuchtdioden.

Die Anzahl an lichtemittierenden Dioden 3 kann nach Bedarf sein. Üblicherweise weist das Array 2 entsprechend der Darstellung in den FIG 2 und 3 mindestens 10 x 10 lichtemittierende Dioden 3 auf. In FIG 1 sind nur zwei der Dioden 3 dargestellt.

Die lichtemittierenden Dioden 3 weisen eine einheitliche Hauptabstrahlrichtung 4 auf, in FIG 1 gestrichelt dargestellt. Die Hauptabstrahlrichtung 4 ist diejenige Richtung, in der die lichtemittierenden Dioden 3 das von ihnen emittierte Licht am stärksten abstrahlen.

Die lichtemittierenden Dioden 3 sind üblicherweise als pLEDs ausgebildet. Derartige Leuchtdioden überdecken orthogonal zur Hauptabstrahlrichtung 4 gesehen in aller Regel jeweils eine Fläche von maximal 0,005 Quadratmillimeter, meist sogar nur eine Fläche von maximal 0,003 Quadratmillimeter. Bei üblicher quadratischer Ausgestaltung entspricht dies einer Seitenlänge a des jeweiligen Quadrats von etwa 70 µm bzw. etwa 55 µm. Derart kleine Leuchtdioden weisen eine Grenzfrequenz auf, die groß genug ist, um High-Speed-Anwendungen bedienen zu können.

Die optische Sendeanordnung weist weiterhin einen Lichtwellenleiter 5 auf. Der Lichtwellenleiter 5 ist in der Hauptabstrahlrichtung 4 gesehen vor dem zweidimensionalen Array 2 angeordnet. Beispielsweise kann die optische Sendeanordnung eine Leiterplatte 6 aufweisen. In diesem Fall kann der Lichtwellenleiter 5 entsprechend der Darstellung in FIG 1 Bestandteil der Leiterplatte 6 sein. Derartige Leiterplatten 6 sind als solche bekannt.

Der optische Chip 1 ist üblicherweise auf einem Chipträger 7 angeordnet. Der Chipträger 7 kann in diesem Fall entsprechend der Darstellung in FIG 1 derart auf der Leiterplatte 6 angeordnet sein, dass das zweidimensionale Array 2 in einer Ausnehmung 8 der Leiterplatte 6 angeordnet ist. Beispielsweise kann eine Hilfsplatine 9 vorhanden sein, auf welcher der Chipträger 7 angeordnet ist. Die Hilfsplatine 9 ist in diesem Fall auf die Leiterplatte 6 aufgebracht, beispielsweise aufgelötet. Der Chipträger 7 ragt, von der Hilfsplatine 9 aus gesehen, in die Ausnehmung 8 hinein.

Die lichtemittierenden Dioden 3 müssen auf die Stirnfläche des Lichtwellenleiters 5 ausgerichtet sein, damit das von den lichtemittierenden Dioden 3 abgestrahlte bzw. emittierte Licht gut in den Lichtwellenleiter 5 eingekoppelt wird. Die lichtemittierenden Dioden 3 sind weiterhin (einzeln gesehen) erheblich kleiner als der Querschnitt des Lichtwellenleiters 5. Das zweidimensionale Array 2 ist hingegen in hinreichendem Umfang größer als der Querschnitt des Lichtwellenleiters 5. Aufgrund der Anordnung des Lichtwellenleiters 5 vor dem zweidimensionalen Array 2 weist das zweidimensionale Array 2 daher erste lichtemittierende Dioden 3a und zweite lichtemittierende Dioden 3b auf. Der Unterschied zwischen den ersten lichtemittierenden Dioden 3a und den zweiten lichtemittierenden Dioden 3b besteht darin, dass das von den ersten lichtemittierenden Dioden 3a abgestrahlte Licht in den Lichtwellenleiter 5 einkoppelt, während das von den zweiten lichtemittierenden Dioden 3b abgestrahlte Licht nicht in den Lichtwellenleiter 5 einkoppelt.

Welche der lichtemittierenden Dioden 3 erste lichtemittierende Dioden 3a sind und welche der lichtemittierenden Dioden 3 zweite lichtemittierende Dioden 3b sind, könnte nur dann bereits vor der Herstellung der optischen Sendeanordnung festgelegt werden, wenn die Fertigungstoleranzen extrem klein gehalten werden. Bei Fertigung mit üblichen Fertigungstoleranzen kann diese Festlegung nicht vor der Herstellung der optischen Sendeanordnung vorab erfolgen. Die Einstufung als erste bzw. zweite lichtemittierende Diode 3a, 3b muss vielmehr nach der Herstellung der optischen Sendeanordnung vorgenommen werden. Zu diesem Zweck können die lichtemittierenden Dioden 3 beispielsweise einzeln und individuell mit einem bestimmten Strom beaufschlagt werden und ausgangsseitig des Lichtwellenleiters 5 jeweils die in den Lichtwellenleiter 5 eingekoppelte Lichtmenge bestimmt werden. Der bestimmte Strom ist für die lichtemittierenden Dioden 3 einheitlich derselbe. Diejenigen der lichtemittierenden Dioden 3, bei denen die in den Lichtwellenleiter 5 eingekoppelte Lichtmenge einen vorbestimmten Schwellenwert übersteigt, werden als erste lichtemittierende Dioden 3a eingestuft, die anderen als zweite lichtemittierende Dioden 3b.

Beispielsweise können aufgrund einer entsprechenden Messung nach dem Herstellen der optischen Sendeanordnung diejenigen der lichtemittierenden Dioden 3, die sich vollständig oder teilweise innerhalb des in FIG 3 eingezeichneten Kreises 10 befinden, als erste lichtemittierende Dioden 3a eingestuft werden, die anderen als zweite lichtemittierende Dioden 3b.

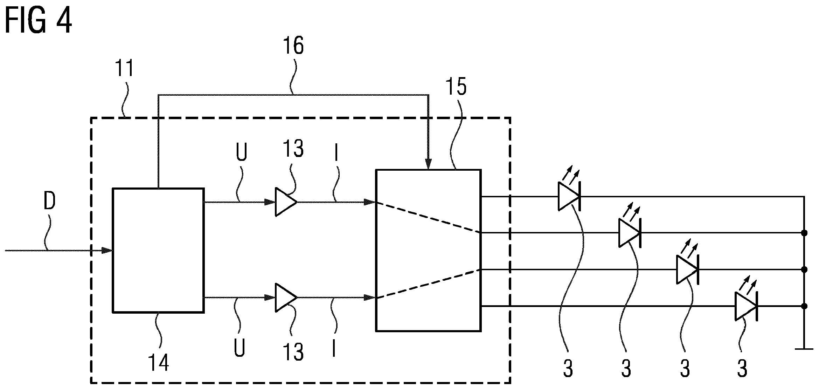

Die optische Sendeanordnung weist entsprechend der Darstellung in FIG 4 weiterhin eine Steuerschaltung 11 auf. Die Steuerschaltung 11 steuert im Betrieb zumindest einen Teil der ersten lichtemittierenden Dioden 3a an. Welche der ersten lichtemittierenden Dioden 3a die Steuerschaltung 11 ansteuert, kann nach Bedarf bestimmt sein. Nachstehend einige mögliche Beispiele:
- Die Steuerschaltung 11 steuert alle ersten lichtemittierenden Dioden 3a an.
- Die Steuerschaltung 11 steuert alle ersten lichtemittierenden Dioden 3a an, die sich vollständig innerhalb des Kreises 10 befinden.
- Die Steuerschaltung 11 steuert fünf der ersten lichtemittierenden Dioden 3a an, die sich vollständig innerhalb des Kreises 10 befinden.
- Die Steuerschaltung 11 steuert acht der ersten lichtemittierenden Dioden 3a an, die sich vollständig innerhalb des Kreises 10 befinden, und steuert zusätzlich zwei der ersten lichtemittierenden Dioden 3a an, die sich nur teilweise innerhalb des Kreises 10 befinden.
- Die Steuerschaltung 11 steuert sieben der ersten lichtemittierenden Dioden 3a an, die sich vollständig innerhalb des Kreises 10 befinden, und steuert zusätzlich vier der ersten lichtemittierenden Dioden 3a an, die sich nur teilweise innerhalb des Kreises 10 befinden.

Welche dieser (oder anderer) Ausgestaltungen ergriffen wird, kann anhand der Bedürfnisse des Einzelfalls entschieden werden. In jedem Fall aber erfolgt die Ansteuerung der angesteuerten ersten lichtemittierenden Dioden 3a derart, dass das von diesen lichtemittierenden Dioden 3a abgestrahlte und in der Folge auch in den Lichtwellenleiter 5 eingekoppelte Licht entsprechend einem Datenstrom D moduliert ist. Der Datenstrom D wird der Steuerschaltung 11 zugeführt.

Alle anderen lichtemittierenden Dioden 3 und damit insbesondere die zweiten lichtemittierenden Dioden 3b werden von der Steuerschaltung 11 nicht angesteuert. Von diesen lichtemittierenden Dioden 3 und damit insbesondere von den zweiten lichtemittierenden Dioden 3b wird daher kein Licht abgestrahlt.

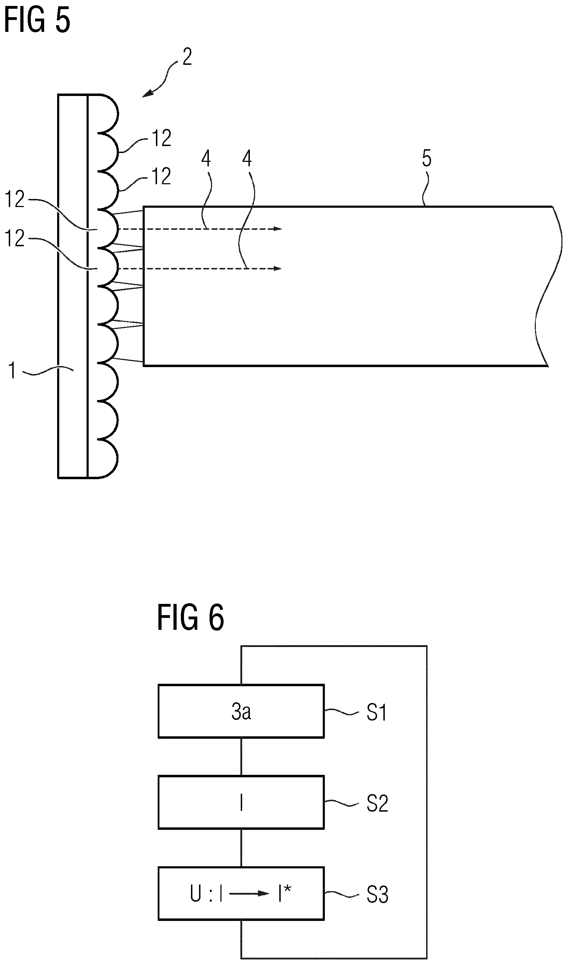

Zur Maximierung der Lichteinkopplung weisen die lichtemittierenden Dioden 3 entsprechend der Darstellung in FIG 5 vorzugsweise jeweils eine Sammellinse 12 auf. Die Gesamtheit der Sammellinsen 12 kann insbesondere ein Bestandteil des optischen Chips 1 sein.

In der Regel weist die Steuerschaltung 11 entsprechend der Darstellung in FIG 4 für die angesteuerten ersten lichtemittierenden Dioden 3a jeweils eine eigene Treiberschaltung 13 auf. Es ist möglich, dass die Anzahl an Treiberschaltungen 13 mit der Anzahl an lichtemittierenden Dioden 3 des zweidimensionalen Arrays 2 korrespondiert. In diesem Fall entscheidet die Steuerschaltung 11, welche der Treiberschaltungen 13 betrieben werden. In der Regel ist entsprechend der Darstellung in FIG 4 die Anzahl an Treiberschaltungen 13 jedoch kleiner als die Anzahl an lichtemittierenden Dioden 3 des zweidimensionalen Arrays 2. Die Darstellung in FIG 4, bei welcher insgesamt nur zwei Treiberschaltungen 13 und insgesamt nur vier lichtemittierende Dioden 3 vorhanden sind, entspricht nicht den tatsächlichen Zahlenverhältnissen, dient jedoch der einfacheren Darstellung, um FIG 4 nicht mit unnötigen Details zu überfrachten.

Wenn die Anzahl an Treiberschaltungen 13 kleiner als die Anzahl an lichtemittierenden Dioden 3 ist, werden von der Steuerschaltung 11 in der Regel zwar alle Treiberschaltungen 13 oder zumindest die meisten der Treiberschaltungen 13 betrieben. Es muss jedoch die Zuordnung der Treiberschaltungen 13 zu den lichtemittierenden Dioden 3 des zweidimensionalen Arrays 2 festgelegt werden. Es muss also festgelegt werden, welche Treiberschaltung 13 ihr Ausgangssignal I - beispielsweise den von ihr getriebenen Strom - welcher der lichtemittierenden Dioden 3 zuführt. Zu diesem Zweck weist die Steuerschaltung 11 vorzugsweise eine Steuereinrichtung 14 und eine integrierte Schaltung 15 mit programmierbarer Verdrahtung auf. Der Datenstrom D wird in diesem Fall der Steuereinrichtung 14 zugeführt. Die Steuereinrichtung 14 gibt Steuersignale U - beispielsweise Steuerspannungen - an die Treiberschaltungen 13 aus, so dass die Treiberschaltungen 13 ihre Ausgangssignale I ausgeben. Sowohl die Steuersignale U als auch die Ausgangssignale I sind entsprechend dem zu übertragenden Datenstrom D moduliert. Sie werden der integrierten Schaltung 15 mit programmierbarer Verdrahtung zugeführt. Die integrierte Schaltung 15 mit programmierbarer Verdrahtung leitet die ihr zugeführten Ausgangssignale I an die angesteuerten ersten lichtemittierenden Dioden 3a weiter. Mittels der integrierten Schaltung 15 mit programmierbarer Verdrahtung erfolgt also die Zuordnung der Ausgangssignale I der Treiberschaltungen 13 zu den angesteuerten ersten lichtemittierenden Dioden 3a.

Die Programmierung der integrierten Schaltung 15 mit programmierbarer Verdrahtung erfolgt, wie in FIG 4 durch einen Pfeil 16 angedeutet ist, vorzugsweise durch die Steuereinrichtung 14. Die Steuereinrichtung 14 und die integrierte Schaltung 15 mit programmierbarer Verdrahtung sind daher vorzugsweise derart ausgebildet und miteinander verbunden, dass die integrierte Schaltung 15 mit programmierbarer Verdrahtung von der Steuereinrichtung 14 programmierbar ist.

Nachstehend wird in Verbindung mit FIG 6 der normale Betrieb der optischen Anordnung erläutert.

Gemäß FIG 6 selektiert die Steuereinrichtung 14 in einem Schritt S1 eine der angesteuerten ersten lichtemittierenden Dioden 3a. In einem Schritt S2 erfasst die Steuereinrichtung 14 das von der zugeordneten Treiberschaltung 13 ausgegebene Ausgangssignal I, beispielsweise den ausgegebenen Strom. In einem Schritt S3 führt die Steuereinrichtung 14 das zugehörige Steuersignal U nach, so dass das entsprechende Ausgangssignal I auf einem Sollwert I* gehalten wird. Sodann geht die Steuereinrichtung 14 zum Schritt S1 zurück. Bei der erneuten Ausführung des Schrittes S1 selektiert die Steuereinrichtung 14 eine andere angesteuerte erste lichtemittierende Diode 3a, bis sie die Schritte S1 bis S3 für alle angesteuerten ersten lichtemittierenden Dioden 3a ausgeführt hat. Danach beginnt der nächste Zyklus, bei dem die Vorgehensweise erneut für alle angesteuerten ersten lichtemittierenden Dioden 3a ausgeführt wird.

Im Rahmen der Darstellung von FIG 6 werden die Schritte S1 bis S3 für die einzelnen angesteuerten ersten lichtemittierenden Dioden 3a sequenziell nacheinander ausgeführt. Prinzipiell gleichwertig ist auch eine simultane Ausführung für alle oder mehrere der angesteuerten ersten lichtemittierenden Dioden 3a gemeinsam.

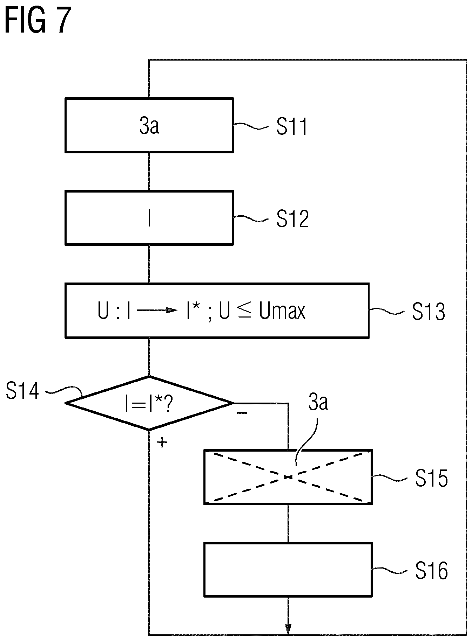

Die bisher erläuterte Vorgehensweise der Schritte S1 bis S3 setzt voraus, dass die angesteuerten ersten lichtemittierenden Dioden 3a ordnungsgemäß funktionieren. Es kann jedoch geschehen, dass einzelne der angesteuerten ersten lichtemittierenden Dioden 3a ausfallen. Die Vorgehensweise von FIG 6 ist daher vorzugsweise entsprechend der Darstellung von FIG 7 ausgestaltet. Die Vorgehensweise von FIG 7 umfasst Schritte S11 bis S16.

Die Schritte S11 und S12 von FIG 7 korrespondieren 1:1 mit den Schritten S1 und S2 von FIG 6. Die Steuereinrichtung 14 selektiert also im Schritt S11 eine der angesteuerten ersten lichtemittierenden Dioden 3a und erfasst im Schritt S12 das zugehörige Ausgangssignal I.

Der Schritt S13 von FIG 7 korrespondiert im Kern mit dem Schritt S3 von FIG 6. Die Steuereinrichtung 14 führt also vom Ansatz her das zugehörige Steuersignal U nach, so dass das entsprechende Ausgangssignal I auf dem Sollwert I* gehalten wird. Das Nachführen des Steuersignals U erfolgt jedoch nur bis zu einem Maximalwert Umax. Dann wird das Nachführen des Steuersignals U auch dann beendet, wenn das entsprechende Ausgangssignal I den Sollwert I* noch nicht erreicht hat.

Im Schritt S14 prüft die Steuereinrichtung 14, ob das entsprechende Ausgangssignal I den zugehörigen Sollwert I* erreicht hat. Wenn dies der Fall ist, geht die Steuereinrichtung 14 direkt zum Schritt S11 zurück. Hat das entsprechende Ausgangssignal I den zugehörigen Sollwert I* hingegen nicht erreicht, so erkennt die Steuereinrichtung 14 auf Ausfall der entsprechenden angesteuerten lichtemittierenden Diode 3a. In diesem Fall markiert die Steuereinrichtung 14 die entsprechende angesteuerte lichtemittierende Diode 3a im Schritt S15 als defekt. Dies hat zur Folge, dass diese erste lichtemittierende Diode 3a zukünftig nicht mehr angesteuert wird. Weiterhin kann die Steuereinrichtung 14 im Schritt S16 andere Maßnahmen ergreifen. Beispielsweise kann die Steuereinrichtung 14 zukünftig (mindestens) eine andere erste lichtemittierende Diode 3a ansteuern. Gegebenenfalls kann die Steuereinrichtung 14 zu diesem Zweck die Programmierung der integrierten Schaltung 15 mit programmierbarer Verschaltung ändern. Alternativ oder zusätzlich kann die Steuereinrichtung 14 eine Meldung an eine übergeordnete Steuereinrichtung (nicht dargestellt) übermitteln und/oder eine Warnmeldung an eine Bedienperson (ebenfalls nicht dargestellt) ausgeben. Die Warnmeldung ist vorzugsweise derart, dass die Bedienperson sie mit ihren Sinnesorganen ohne weiteres wahrnehmen kann. Die Warnmeldung kann beispielsweise optischer und/oder akustischer Natur sein.

Vom Schritt S16 aus geht die Steuereinrichtung 14 wieder zum Schritt S11 zurück.

Ebenso wie bei FIG 6 können auch bei FIG 7 die Schritte S11 bis S16 für die einzelnen angesteuerten ersten lichtemittierenden Dioden 3a sequenziell nacheinander ausgeführt oder simultan für alle oder mehrere der angesteuerten ersten lichtemittierenden Dioden 3a gemeinsam ausgeführt werden.

Zusammengefasst betrifft die vorliegende Erfindung somit folgenden Sachverhalt:
Eine optische Sendeanordnung weist einen optischen Chip 1, einen Lichtwellenleiter 5 und eine Steuerschaltung 11 auf. Auf dem optischen Chip 1 ist ein zweidimensionales Array 2 von lichtemittierenden Dioden 3 angeordnet, die eine einheitliche Hauptabstrahlrichtung 4 aufweisen, in der sie das von ihnen emittierte Licht abstrahlen. Der Lichtwellenleiter 5 ist in der Hauptabstrahlrichtung 4 gesehen vor dem zweidimensionalen Array 2 von lichtemittierenden Dioden 3 angeordnet. Aufgrund der Anordnung des Lichtwellenleiters 5 weist das zweidimensionale Array 2 erste und zweite lichtemittierende Dioden 3b auf. Das von den ersten lichtemittierenden Dioden 3a abgestrahlte Licht koppelt in den Lichtwellenleiter 5 ein, das von den zweiten lichtemittierenden Dioden 3b abgestrahlte Licht nicht. Die Steuerschaltung 11 ist derart ausgebildet, dass sie im Betrieb zumindest einen Teil der ersten lichtemittierenden Dioden 3a ansteuert, so dass von diesen lichtemittierenden Dioden 3a abgestrahltes und in den Lichtwellenleiter 5 eingekoppeltes Licht entsprechend einem der Steuerschaltung 11 zugeführten zu übertragenden Datenstrom D moduliert ist. Zumindest die zweiten lichtemittierenden Dioden 3b steuert die Steuerschaltung 11 im Betrieb nicht an, so dass von den zweiten lichtemittierenden Dioden 3b kein Licht abgestrahlt wird.

Die vorliegende Erfindung weist viele Vorteile auf. Insbesondere im Falle der Ausgestaltung der lichtemittierenden Dioden 3 als pLEDs sind die lichtemittierenden Dioden 3 in ihrer gerichteten Abstrahlleistung zwar weniger effektiv als Laserdioden. Aufgrund der Verwendung mehrerer derartiger Dioden 3 ist die Gesamtabstrahlleistung jedoch in hinreichendem Umfang erhöht. Im Ergebnis wird die kleine Einkoppelfläche des Lichtwellenleiters 5 hinreichend ausgeleuchtet. Dennoch kann die hohe Grenzfrequenz für die Datenübertragung erhalten bleiben. Dies gilt insbesondere, weil jeder angesteuerten ersten lichtemittierenden Diode 3a jeweils eine eigene Treiberschaltung 13 zugeordnet sein kann. Somit können die Vorteile von LEDs für High-Speed-Kommunikationssysteme genutzt werden. Eine Verwendung von Laserdioden als lichtemittierende Diode 3 ist zwar möglich, aber nicht erforderlich. Der Positionieraufwand bei der Fertigung kann deutlich reduziert werden. Dadurch ist auch die Fertigung auf einfache Weise automatisierbar. Insbesondere ist eine maschinelle Bestückung und Konfektionierung möglich. Die Vorteile von LEDs bezüglich Lebensdauer und allmählicher Degradation können genutzt werden. Der Ausfall einzelner lichtemittierender Dioden 3 ist oftmals unkritisch.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Optische Sendeanordnung, die einen optischen Chip (1), einen Lichtwellenleiter (5) und eine Steuerschaltung (11) aufweist,
**dadurch gekennzeichnet,**
- **dass** auf dem optischen Chip (1) ein zweidimensionales Array (2) von lichtemittierenden Dioden (3) angeordnet ist,
- **dass** die lichtemittierenden Dioden (3) eine einheitliche Hauptabstrahlrichtung (4) aufweisen, in der sie das von ihnen emittierte Licht abstrahlen,
- **dass** der Lichtwellenleiter (5) in der Hauptabstrahlrichtung (4) gesehen vor dem zweidimensionalen Array (2) von lichtemittierenden Dioden (3) angeordnet ist,
- **dass** das zweidimensionale Array (2) aufgrund der Anordnung des Lichtwellenleiters (5) erste lichtemittierende Dioden (3a) aufweist, deren abgestrahltes Licht in den Lichtwellenleiter (5) einkoppelt, und zweite lichtemittierende Dioden (3b) aufweist, deren abgestrahltes Licht nicht in den Lichtwellenleiter (5) einkoppelt, und
- **dass** die Steuerschaltung (11) derart ausgebildet ist, dass sie im Betrieb
-- zumindest einen Teil der ersten lichtemittierenden Dioden (3a) ansteuert, so dass von den angesteuerten ersten lichtemittierenden Dioden (3a) abgestrahltes und in den Lichtwellenleiter (5) eingekoppeltes Licht entsprechend einem der Steuerschaltung (11) zugeführten zu übertragenden Datenstrom (D) moduliert ist, und
-- zumindest die zweiten lichtemittierenden Dioden (3b) nicht ansteuert, so dass von den zweiten lichtemittierenden Dioden (3b) kein Licht abgestrahlt wird.

2. Optische Sendeanordnung nach Anspruch 1,
**dadurch gekennzeichnet,**
**dass** die Steuerschaltung (11) für die angesteuerten ersten lichtemittierenden Dioden (3a) jeweils eine eigene Treiberschaltung (13) aufweist.

3. Optische Sendeanordnung nach Anspruch 2,
**dadurch gekennzeichnet,**
**dass** die Anzahl an Treiberschaltungen (13) der Steuerschaltung (11) kleiner als die Anzahl an lichtemittierenden Dioden (3) des zweidimensionalen Arrays (2) ist.

4. Optische Sendeanordnung nach Anspruch 2 oder 3,
**dadurch gekennzeichnet,**
**dass** die Steuerschaltung (11) derart ausgebildet ist, dass sie Steuersignale (U), mit denen sie die den angesteuerten ersten lichtemittierenden Dioden (3a) zugeordnete Treiberschaltungen (13) ansteuert, überwacht, und auf Ausfall einer jeweiligen angesteuerten ersten lichtemittierenden Diode (3a) erkennt, wenn das Steuersignal (U), mit dem sie die entsprechende Treiberschaltung (13) ansteuert, einen Maximalwert (Umax) erreicht, ohne dass ein der jeweiligen angesteuertenersten lichtemittierenden Diode (3a) von der zugeordneten Treiberschaltung (13) zugeführtes Ausgangssignal (I) einen Sollwert (I*) erreicht.

5. Optische Sendeanordnung nach Anspruch 2, 3 oder 4,
**dadurch gekennzeichnet,**
- **dass** die Steuerschaltung (11) eine Steuereinrichtung (14) und eine integrierte Schaltung (15) mit programmierbarer Verdrahtung aufweist,
- **dass** der zu übertragende Datenstrom (D) der Steuereinrichtung (14) der Steuerschaltung (11) zugeführt wird,
- **dass** die Steuereinrichtung (14) Steuersignale (U) an die Treiberschaltungen (13) ausgibt, die entsprechend dem zu übertragenden Datenstrom (D) moduliert sind, so dass die Treiberschaltungen (13) Ausgangssignale (I) ausgeben, die entsprechend dem zu übertragenden Datenstrom (D) moduliert sind,
- **dass** die Ausgangssignale (I) der integrierten Schaltung (15) mit programmierbarer Verdrahtung zugeführt werden und
- **dass** die integrierte Schaltung (15) mit programmierbarer Verdrahtung die ihr zugeführten Ausgangssignale (I) an die angesteuerten ersten lichtemittierenden Dioden (3a) weiterleitet.

6. Optische Sendeanordnung nach Anspruch 5,
**dadurch gekennzeichnet,**
**dass** die Steuereinrichtung (14) und die integrierte Schaltung (15) mit programmierbarer Verdrahtung derart ausgebildet und miteinander verbunden sind, dass die integrierte Schaltung (15) mit programmierbarer Verdrahtung von der Steuereinrichtung (14) programmierbar ist.

7. Optische Sendeanordnung nach einem der obigen Ansprüche,
**dadurch gekennzeichnet,**
**dass** die optische Sendeanordnung eine Leiterplatte (6) aufweist und dass der Lichtwellenleiter (5) Bestandteil der Leiterplatte (6) ist.

8. Optische Sendeanordnung nach Anspruch 7,
**dadurch gekennzeichnet,**
**dass** der optische Chip (1) auf einem Chipträger (7) angeordnet ist und dass der Chipträger (7) derart auf der Leiterplatte (6) angeordnet ist, dass das zweidimensionale Array (2) von lichtemittierenden Dioden (3) in einer Ausnehmung (8) der Leiterplatte (6) angeordnet ist.

9. Optische Sendeanordnung nach einem der obigen Ansprüche,
**dadurch gekennzeichnet,**
**dass** die lichtemittierenden Dioden (3) als Bestandteil des optischen Chips (1) jeweils eine Sammellinse (12) aufweisen.

10. Optische Sendeanordnung nach einem der obigen Ansprüche,
**dadurch gekennzeichnet,**
**dass** die lichtemittierenden Dioden (3) orthogonal zur Hauptabstrahlrichtung (4) gesehen jeweils eine Fläche von maximal 0,005 Quadratmillimeter überdecken, vorzugsweise eine Fläche von maximal 0,003 Quadratmillimeter.

11. Optische Sendeanordnung nach einem der obigen Ansprüche,
**dadurch gekennzeichnet,**
**dass** die lichtemittierenden Dioden (3) Leuchtdioden sind.
